# FASCICULE DE BREVET EUROPEEN

(11) **EP 4 077 880 B1**
(45) Date de publication et mention de la délivrance du brevet: **30.07.2025**
(21) Numéro de dépôt: 20829924.8
(22) Date de dépôt: 18.12.2020
(51) Int. Cl.: F01D 5/14, F01D 17/16, F01D 25/16, F04D 29/52, F04D 29/56, F04D 29/64, F01D 25/28, F02C 9/20

(54) **MODULE POUR TURBOMACHINE**
TURBOMASCHINENMODUL
MODULE FOR TURBOMACHINE

(30) Priorité: 18.12.2019 BE 201905933
(43) Date de publication de la demande: 26.10.2022
(73) Titulaire: Safran Aero Boosters SA, 4041 Herstal (BE)
(72) Inventeur: CRACCO, Cédric, Carl, Nathan, 4041 Herstal (BE)
(74) Mandataire: Ipsilon Benelux
(86) Numéro de dépôt international: PCT/EP2020/086997
(87) Numéro de publication internationale: WO 2021/123146

(56) Documents cités:
- EP-A1- 3 502 416
- EP-A2- 0 942 150
- GB-A- 2 405 184
- US-A1- 2016 061 054

## Description

### Domaine technique

L'invention a trait à un ensemble pour turbomachine. Plus précisément, l'invention a trait à un module de compresseur comprenant des bras radiaux et des aubes statoriques.

### Technique antérieure

Certains éléments de support d'une turbomachine peuvent être accompagnés de dispositifs ayant des fonctions aérodynamiques. Par exemple, le document GB 2 405 184 décrit des aubes pivotantes dans un flux secondaire de turbomachine, les aubes se situant en aval et circonférentiellement en décalage par rapport à des bras de support. Le document US 2016/0061054 A1 décrit une technique d'insufflation d'air en aval de bras de support pour dévier le flux.

A un autre endroit, un carter de compresseur de turbomachine axiale peut comprendre un tronçon structurel composé essentiellement d'un anneau externe, d'un moyeu central et de bras structuraux, dits « struts », s'étendant radialement entre le moyeu et l'anneau. Le carter structural forme une structure portante du réacteur. Il se présente généralement sous la forme d'une pièce monobloc obtenue par fonderie et définit une veine d'air en forme de col de cygne.

En amont et en aval du col de cygne sont généralement disposées deux rangées annulaires d'aubes statoriques.

Le document FR 3 032 480 A1 décrit une conception de carter structural dans laquelle les bras structuraux ont un profil amont identique à celui d'aubes amont axialement alignées avec celui-ci.

Une telle conception peut nécessiter une rangée d'aubes statoriques en aval des bras afin de diriger le flux de manière appropriée pour les étages suivants du compresseur et notamment les premières aubes rotoriques du compresseur en aval du carter.

Cette conception est aussi encombrante et il demeure une marge d'amélioration possible pour diminuer la longueur totale du turboréacteur.

### Résumé de l'invention

### Problème technique

L'invention a pour objectif d'améliorer la compacité du turboréacteur sans dégrader l'écoulement du flux d'air.

### Solution technique

L'invention a trait à un module de compresseur de turbomachine, comprenant : un moyeu central sensiblement axisymétrique ; un anneau externe, coaxial au moyeu central ; une rangée annulaire de bras s'étendant du moyeu central à l'anneau externe et définissant des espaces inter-bras entre deux bras circonférentiellement adjacents ; et une rangée annulaire d'aubes statoriques s'étendant du moyeu central à l'anneau externe et disposées au moins partiellement dans les espaces inter-bras ; remarquable en ce que les aubes statoriques sont orientables autour d'un axe respectif à chaque aube et en ce que chaque bras dispose d'une portion amont, fixe, et d'un volet aval pivotable autour d'un axe respectif à chaque volet.

Ainsi, les aubes statoriques à orientation variable (aussi appelées à calage variable ou VSV en anglais pour « Variable stator vane ») sont pourvues en chevauchement axial des bras. Tout cet agencement peut être formé dans la veine en col de cygne du carter structural.

Les bras et les aubes peuvent avoir des formes complexes et peuvent s'étendre selon une direction moyenne du moyeu central à l'anneau externe qui peut être sensiblement radiale et/ou normale aux surfaces du moyeu central et/ou de l'anneau externe qui guident le flux d'air.

De même, l'axe de pivotement des aubes peut être sensiblement radial.

La portion amont et le volet aval peuvent présenter une continuité de surface de guidage de l'air. L'axe de pivotement du volet est voisin de la portion amont afin que le pivotement du volet n'entraîne pas de discontinuité dans le guidage de l'air.

Les volets permettent d'obtenir un flux en sortie du module qui est circonférentiellement plus homogène et permettent de limiter le risque de turbulences en sortie du module.

Selon un mode avantageux de l'invention, les aubes et les volets, disposent de bords de fuite respectifs, et les aubes et les volets sont tels qu'il existe au moins une position de pivotement des aubes et/ou des volets dans laquelle les bords de fuite respectifs partagent une position axiale commune. Ainsi, la superposition axiale des bras et des aubes est totale : les aubes ne s'étendent pas plus en aval que les bras (avec leur volet). Ceci permet une compacité maximale du module de compresseur et par conséquence du turboréacteur. Le bord de fuite du volet et le bord de fuite des aubes peuvent préférentiellement avoir la même position axiale pour toutes les orientations angulaires du volet et des aubes.

Selon un mode avantageux de l'invention, chaque bras dispose d'un intrados et d'un extrados. Dans ce cas, les bras - avec les aubes rotoriques en amont et en aval - participent à la compression du flux d'air en permettant éventuellement également aux aubes d'être axialement plus courtes pour un même taux de compression.

Selon un mode avantageux de l'invention, chaque bras a une section dont au moins une portion est symétrique par rapport à un axe parallèle à l'axe du moyeu et/ou au moins une portion est asymétrique par rapport à un axe parallèle à l'axe du moyeu. Par exemple, une portion amont du bras peut être symétrique, et diriger le flux d'air purement axialement et une portion aval peut être non axisymétrique et dévier le flux d'air.

Selon un mode avantageux de l'invention, chaque bras a une section dont une portion est symétrique par rapport à un axe non parallèle à l'axe du moyeu. Ainsi, les bras peuvent participer à la déviation du flux. Le flux sortant des bras n'est plus nécessairement axial.

Selon un mode avantageux de l'invention, au moins un des volets a une section sensiblement identique à la section d'au moins une des aubes.

Selon un mode avantageux de l'invention, au moins un des volets a une section différente de la section d'au moins une des aubes, en particulier l'épaisseur de chaque volet est au moins deux fois supérieure à l'épaisseur de chaque aube. L'épaisseur pourra par exemple être mesurée perpendiculairement à la ligne de corde reliant les bords d'attaques aux bords de fuite des aubes ou des bras.

Selon un mode avantageux de l'invention, la section des aubes est identique pour toutes les aubes de la rangée d'aubes et/ou la section des bras n'est pas identique pour tous les bras. On pourra par exemple prévoir un ou des bras de section plus grosse, par exemple pour recevoir une conduite de lubrification des paliers ou du réducteur. Le ou les bras les plus gros pourront par exemple se situer dans la partie circonférentielle du module qui est destinée à être en bas, dans le sens de fonctionnement normal du module assemblé dans le turboréacteur.

Selon un mode avantageux de l'invention, deux rangées annulaires d'aubes statoriques axialement distantes l'une de l'autre sont agencées dans les espaces inter-bras. Ainsi, la rangée statorique en amont des bras et la rangée statorique en aval des bras peuvent être ramenées axialement dans les espaces inter-bras.

Selon un mode avantageux de l'invention, un mécanisme d'actionnement commun commande l'orientation des aubes et le pivotement des volets. Ce mécanisme peut être intégré sur le module et ainsi permettre un gain d'encombrement sur la virole extérieure directement en aval du module.

Selon un mode avantageux de l'invention, au moins deux mécanismes d'actionnement sont agencés pour orienter un premier groupe d'aubes statoriques selon une orientation et un second groupe d'aubes statoriques de la même rangée annulaire d'aubes statoriques selon une orientation différente de celle du premier groupe.

Selon un mode avantageux de l'invention, entre le moyeu central et l'anneau externe s'étend un passage d'air de forme en col de cygne, le module étant destiné à être implanté entre deux compresseurs d'une turbomachine.

Selon un mode avantageux de l'invention, la corde des bras est de 6 à 10 fois supérieure à la corde des aubes statoriques.

Selon un mode avantageux de l'invention, l'épaisseur des bras est entre 2 et 5 fois supérieur à l'épaisseur des aubes statoriques.

L'invention porte également sur une turbomachine axiale comprenant un compresseur basse-pression et/ou un compresseur haute-pression, muni d'un module selon l'un des modes de réalisation exposés ci-dessus, la turbomachine comprenant une rangée d'aubes rotoriques directement en aval du module.

Ainsi, il n'y a pas de rangée d'aubes statoriques entre le carter structural et le premier rotor du compresseur.

### Avantages apportés

Le fait de ramener une rangée d'aubes statoriques à orientation variable en chevauchement des bras structuraux permet un gain de compacité axiale du turboréacteur tout en garantissant un taux de compression et donc un rendement du compresseur qui soit optimale. Aussi, l'écoulement du flux est assuré de manière appropriée par l'orientation des aubes.

### Brève description des dessins

La figure 1 représente une turbomachine selon l'état de la technique ;
La figure 2 représente une turbomachine axiale selon l'invention ;
La figure 3 esquisse le module de compresseur selon l'invention dans une coupe perpendiculaire à l'axe de la turbomachine ;
La figure 4 illustre une vue partielle d'un module non revendiqué, vu radialement depuis l'extérieur.
Les figures 5 à 9 montrent d'autres exemples de mode de réalisation du module selon l'invention.

### Description des modes de réalisation

Dans la description qui va suivre, les termes « interne » et « externe » renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation.

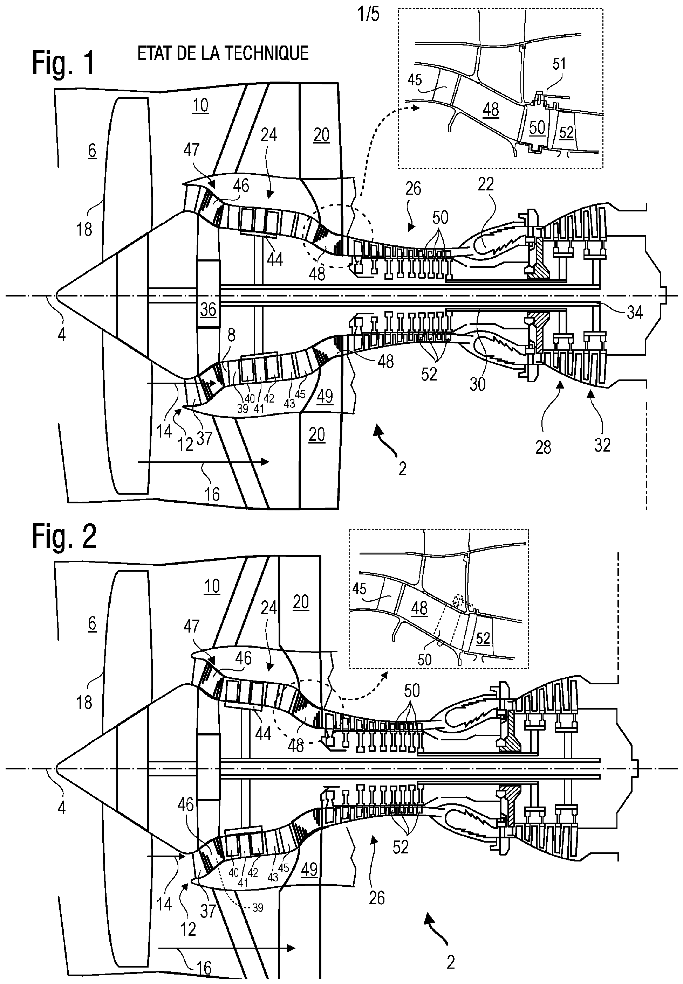

La figure 1 représente de manière simplifiée une turbomachine axiale de l'état de la technique. Il s'agit dans ce cas précis d'un turboréacteur 2 double-flux.

La turbomachine 2 présente un axe de rotation 4. Une entrée annulaire 6 se divise en une veine primaire 8 et en une veine secondaire 10 grâce à un bec de séparation 12 de forme circulaire. Ces veines 8 et 10 sont empruntées par, respectivement, un flux primaire 14 et un flux secondaire 16, qui se rejoignent en sortie de la turbomachine 2. Les flux primaire 14 et secondaire 16 sont des flux annulaires coaxiaux et emmanchés l'un dans l'autre. Ils sont canalisés par les parois internes et externes de la turbomachine 2.

Le flux secondaire 16 est accéléré par une soufflante 18 disposée en entrée 6, afin de générer une poussée pour le vol d'un aéronef. Des pales de redressement 20 peuvent être disposées dans la veine secondaire 10 et être configurées afin d'augmenter la composante axiale de la vitesse du flux secondaire. La soufflante 18 est disposée en amont de la veine primaire 8 et de la veine secondaire 10.

Alternativement, la soufflante peut être du type non-carénée, par exemple à double rotor contrarotatifs. Elle peut être placée autour de la veine primaire.

La turbomachine 2 comprend une zone de compression formée par deux compresseurs 24, 26, une chambre de combustion 22 et une zone de détente 28, 32. Les compresseurs 24, 26 sont composés d'un compresseur basse-pression 24 et d'un compresseur haute-pression 26.

Le compresseur haute-pression 26 peut être placé en entrée de la chambre de combustion 22.

En aval de la chambre de combustion 22, la turbomachine 2 peut présenter une turbine haute-pression 28 couplée à un arbre haute-pression 30, puis une turbine basse-pression 32 couplée à un arbre basse-pression 34. Ce dernier peut être indépendant en rotation de l'arbre haute-pression 30. Ces turbines 28, 32 peuvent former la zone de détente du flux primaire 14.

En fonctionnement, la puissance mécanique reçue par les turbines 28, 32 est transmise aux arbres 30, 34 qui mettent en mouvement les compresseurs 24, 26. Ces derniers comportent plusieurs rangées d'aubes de rotor associées à des rangées d'aubes de stator. Les aubes de rotor sont solidaires ou cinématiquement entraînées par les arbres 30, 34 autour de l'axe de rotation 4 pour générer un débit d'air et de comprimer progressivement ce dernier jusqu'à l'entrée de la chambre de combustion 22.

La turbomachine peut comprendre des moyens de démultiplication, tel un réducteur 36 qui entraîne la soufflante 18 à une vitesse de rotation plus faible que celle des aubes rotoriques. Ainsi, deux turbines suffisent pour entraîner les compresseurs et la soufflante à trois vitesses de rotation respectives différentes.

Dans cet exemple, le compresseur basse-pression 24 comprend deux rangées d'aubes rotoriques 40, 42 solidaires de l'arbre 34 via un rotor 44.

Le compresseur 24 comprend des aubes statoriques 39, 41 intercalées entre les aubes rotoriques 40, 42.

Le compresseur 24 peut comprendre une alternance d'aubes statoriques et rotoriques, ou comme dans l'exemple illustré, deux rangées successives d'aubes statoriques 43, 45 dans sa partie aval. L'ensemble des aubes statoriques 39, 41, 43, 45 forme le redresseur du compresseur 24.

Le stator de la turbomachine 2 peut comprendre plusieurs modules de carters de support, dont un module amont 47 et un module aval 49 disposés de part et d'autre du compresseur 24. Ces modules 47, 49 peuvent comprendre des manches annulaires formant des tronçons de la veine primaire 8. Ils peuvent présenter des bras de support (dits « struts » en anglais) 46, 48 traversant radialement la veine 8. Les manches annulaires peuvent présenter des profils en col de cygne. Elles peuvent marquer des réductions importantes de diamètre de la veine primaire 8.

Le module amont 47 et ses bras 46 peuvent supporter le réducteur 36.

En amont des bras 46 est prévue une rangée d'aubes statoriques 37 à proximité du bec 12. En aval des bras 48 figure le compresseur haute-pression 26 muni d'aubes statoriques 50 et rotoriques 52. Ces dernières étant entraînées en rotation au moyen de l'arbre 30.

En général, directement en amont et directement en aval des bras 46, 48 sont disposées des rangées d'aubes statoriques, afin que le flux d'air qui parcourt les espaces inter-bras ait un écoulement de direction sans composante tangentielle

(sensiblement axiale). Ces rangées peuvent être, ou non, des rangées d'aubes à calage variable, c'est-à-dire que leur orientation autour d'un axe radial est ajustable. Ces aubes sont supportées par une virole externe et interne en aval ou en amont des carters structuraux 47, 49.

Une portion en haut à droite de la figure 1 représente une vue agrandie de l'entrée du compresseur haute-pression 26. On y voit notamment la succession dans le sens de l'écoulement, d'une rangée annulaire de bras 48, suivie d'une rangée annulaire d'aubes statoriques 50 dont l'orientation est variable au moyen d'un dispositif 51. Une première rangée d'aubes rotoriques 52 est également illustrée en aval des aubes à calage variable 50.

La figure 2 représente une turbomachine selon l'invention.

Celle-ci diffère de la turbomachine connue de l'état de la technique essentiellement au travers de la conception des modules 47 et 49. L'un, l'autre ou les deux modules structuraux 47, 49 peut/peuvent comprendre au moins une rangée d'aubes statoriques en chevauchement axial des bras structuraux 46, 48.

Ainsi, comme il transparaît d'une comparaison entre la longueur de la turbomachine de la figure 2 et celle de la figure 1 (voir trait mixte en bas à droite de la figure 1 et en haut à droite de la figure 2), l'intégration d'aubes statoriques dans le carter permet un gain de longueur de la turbomachine.

La figure 2 illustre les aubes 37 partiellement en chevauchement des bras 46 et les aubes 39 entièrement intégrées entre les bras 46. Alternativement, les aubes 39 peuvent n'être que partiellement au niveau axial des bras 46 et/ou les aubes 37 être en amont des bras 46.

Les mêmes modifications peuvent être faites, en complément ou en alternative, sur les bras 48 du module 49. Un encart en vue agrandie représente les aubes 50 à calage variable en entrée du compresseur haute-pression 26 qui chevauchent axialement les bras 48. Ainsi les aubes rotoriques 52 peuvent être placées directement après les bras 48.

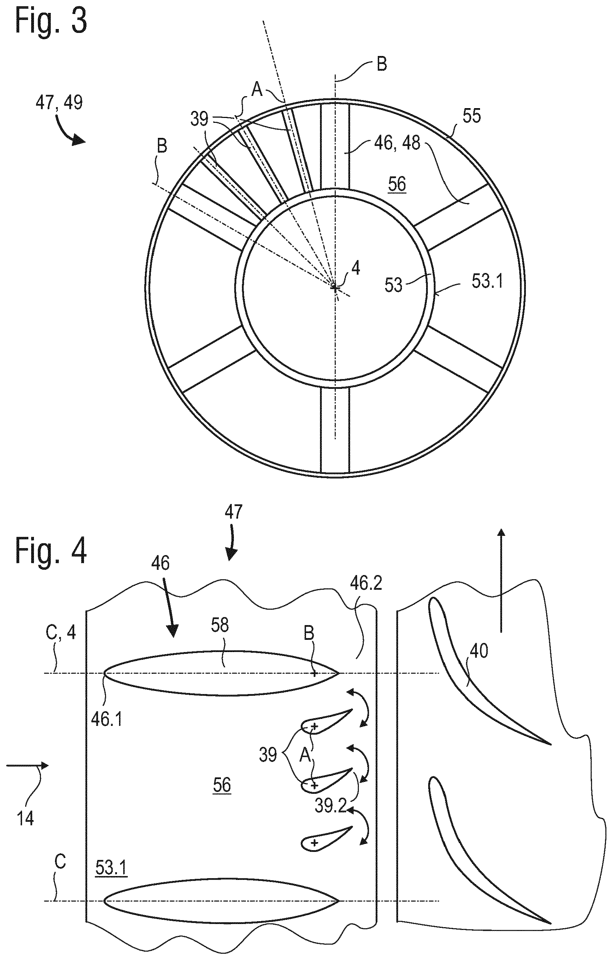

La figure 3 montre une vue du module 47 ou 49 en coupe perpendiculaire à l'axe 4. Le module 47, 49 est formé des bras 46 ou 48, des aubes 37, 39 ou 45, d'un moyeu 53 et d'un anneau externe 55. Dans la suite, les numéros de référence en rapport au module 47 seront utilisés. L'homme du métier comprendra que les mêmes enseignements peuvent être appliqués, alternativement ou en combinaison, au module 49.

Les bras 46 définissent, circonférentiellement entre deux bras 46 adjacents, des espaces inter-bras 56.

Par souci de clarté, seules trois aubes 39 sont représentées sur la figure 3 dans un espace inter-bras 56. Plusieurs espaces inter-bras 56 et préférentiellement tous les espaces 56 accueillent des aubes 39 en nombre égal ou différent, préférentiellement régulièrement espacées circonférentiellement.

Le moyeu central 53 présente une surface externe 53.1 qui peut être sensiblement conique. La surface externe 53.1 peut aussi être courbe, voire avoir un point d'inflexion, pour que la veine parcourue par le flux d'air dans le module 47 ressemble à un « col de cygne ». Le diamètre du moyeu 53 en amont est plus grand que le diamètre aval.

Les bras 46 sont préférablement régulièrement distribués angulairement autour du moyeu central 53. Alternativement, de plus nombreux bras 46 ou des bras d'épaisseur circonférentielle plus importante peuvent être prévus dans la moitié inférieure du module (dans le sens de montage du compresseur sur l'avion).

Les différentes pièces du module 47 peuvent être assemblées par soudage, par exemple laser ou electron beam welding.

Les aubes intégrées au module 47 et notamment les aubes 39 peuvent être orientable autour d'un axe A respectif à chaque aube, qui est ici représenté comme radial. Un mécanisme d'actionnement (non représenté) commun à toutes les aubes - par exemple un anneau et un système de bielles - permet de pivoter les aubes autour de leur axe A. Alternativement, un groupe d'aubes peut être pivoté selon un angle donné à l'aide d'un mécanisme d'actionnement alors qu'un autre groupe d'aubes de la même rangée annulaire d'aubes peut être pivoté selon un autre angle donné autour de leurs axes A respectifs.

Le mécanisme d'actionnement de l'orientation des aubes peut être par exemple celui illustré dans le document EP 3 361 058 A1. Plusieurs mécanismes d'actionnement sous la forme d'anneaux de synchronisation coaxiaux et indépendant permettent de pivoter les aubes selon des angles différents, chaque anneau engageant un groupe de bielles liées aux aubes d'un groupe d'aubes.

Par exemple, les aubes adjacentes aux bras seront inclinées d'un angle donné qui sera différent des aubes qui ne sont pas adjacentes aux bras afin de compenser le cas échéant l'épaisseur circonférentielle des bras plus importante que celle des aubes. Ceci peut permettre une homogénéité des passages de l'air circonférentiellement.

Pour la même raison, les aubes peuvent avoir des profils différents, selon qu'elles sont situées au voisinage des bras ou plus éloignées circonférentiellement, vers le centre de l'espace inter-bras. Les bras ayant une épaisseur circonférentielle plus importante que les aubes, une progressivité, de proche en proche, de l'épaisseur des aubes, pour se rapprocher régulièrement de l'épaisseur des bras peut être envisagée.

Les bras 46, 48 s'étendent généralement selon un axe B respectif à chaque bras 46, 48. L'axe B est ici illustré radialement à l'axe 4.

La figure 4 illustre une vue partielle du module 47 selon un axe B, vu radialement depuis l'extérieur. On peut y voir la surface externe 53.1 du moyeu et l'espace inter-bras 56, entre deux bras 46 circonférentiellement adjacents. La flèche 14 représente la direction générale du flux qui est sensiblement axiale (parallèle à l'axe 4) en entrée ou en sortie du compresseur.

Une portion du rotor figure à droite de la figure 4 avec les aubes 40 et une flèche indiquant le sens de rotation du rotor.

Le bras 46 dispose d'un bord d'attaque 46.1 et d'un bord de fuite 46.2.

Dans l'espace inter-bras 56 sont agencées des aubes 39. Dans cet exemple, les aubes 39 sont complètement comprises dans cet espace 56. Il peut exister une position angulaire des aubes 39 dans laquelle les bords de fuite 46.2 des bras sont sensiblement alignés axialement avec les bords de fuite 39.2 des aubes 39.

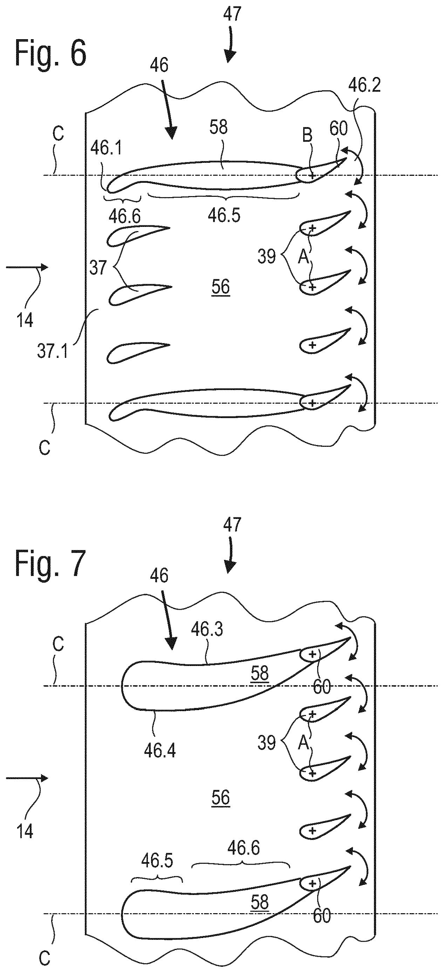

Alternativement ou en combinaison, des aubes peuvent être prévues en regard de la portion amont 58 et peuvent présenter un bord d'attaque aligné avec le bord d'attaque 46.1 des bras (voir aubes 37 sur la figure 6).

Du fait de l'intégration des aubes 39 dans les espaces inter-bras, le flux d'air 14 peut rencontrer des aubes rotoriques (voir 40 ou 52 sur la figure 1) directement en aval du module 47.

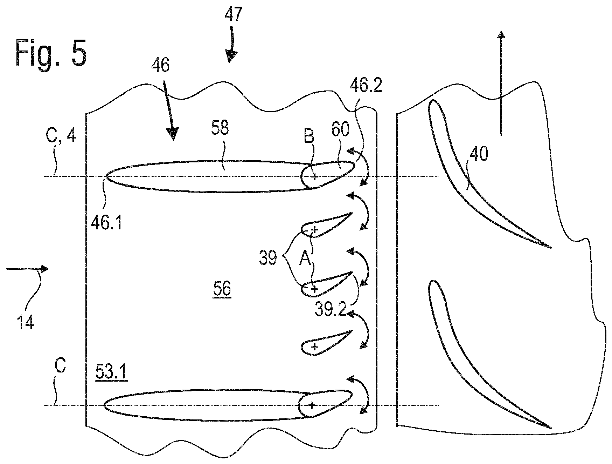

La figure 5 représente un autre mode de réalisation de l'invention. La figure 5 se distingue de la figure 4 en ce que le bras 46 est fait d'une portion amont fixe 58 et d'une portion aval pivotable, ou volet 60. Le volet 60 pivote selon l'axe B, radial et passant par le bras 46. Le pivotement des volets 60 peut être commandé par le même mécanisme d'actionnement que celui qui oriente les aubes 39 ou qui commande un groupe d'aube 39 comme décrit précédemment.

L'axe B peut être à une position axiale entre 60 et 90% de la corde des bras.

La portion amont 58 peut être sensiblement symétrique par rapport à un axe C parallèle à l'axe 4 de la turbomachine 2 ou par rapport à un axe bord d'attaque-bord de fuite des bras dans une position non actionnée des volets 60.

Le volet 60 peut avoir un profil (dans cette vue en coupe) qui est différent du profil des aubes 39. Par exemple le volet 60 peut être au moins deux fois plus épais que les aubes 39 (dans une direction perpendiculaire à la corde du volet ou des aubes). Alternativement (voir figures 6 à 8), le volet 60 peut avoir un profil identique aux aubes, dans cette vue en coupe perpendiculaire à l'axe B.

Les figures 6 à 8 illustrent d'autres exemples de profil pour le bras et les aubes.

La figure 6 illustre en particulier une portion 46.5 du bras qui est symétrique par rapport à l'axe C et une portion amont 46.6 qui est asymétrique par rapport à l'axe C. La portion amont 46.6 a dans cet exemple a un profil qui correspond à celui des aubes 37, agencées ici complètement dans l'espace inter-bras 56.

Les aubes 37, tout comme les aubes 39, peuvent avoir des profils qui ne sont pas identiques sur toute la circonférence du module, ou avoir des orientations qui ne sont pas identiques sur toute la circonférence du module.

Sur l'exemple de la figure 7, la portion symétrique par rapport à l'axe C, 46.5, est en amont. Le bras comprend un intrados 46.3 et un extrados 46.4. Dans cet exemple, en plus du volet 60, la partie fixe 58 participe à la compression du flux d'air.

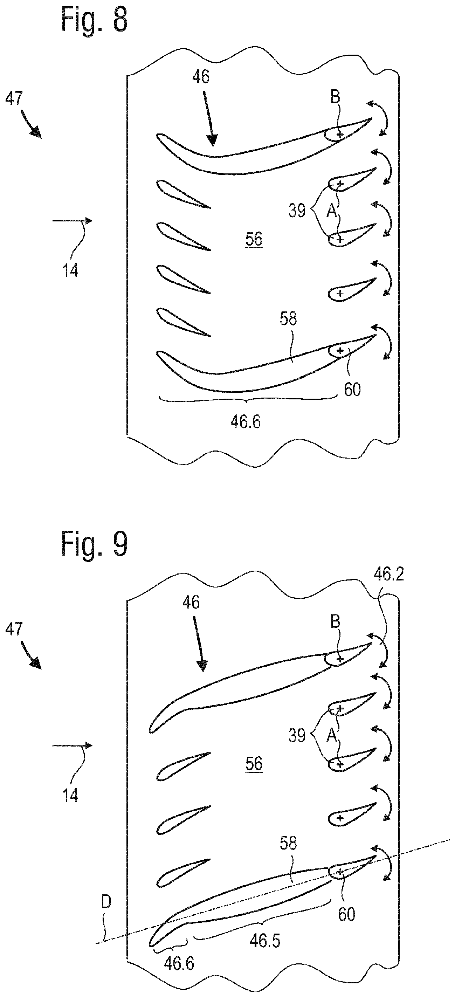

La figure 8 montre un mode de réalisation où le bras n'a aucune portion qui présente de symétrie d'axe.

La figure 9 illustre un exemple supplémentaire. Deux rangées d'aubes statoriques 37, 39 sont agencées dans l'espace inter-bras 56. Seule une des rangées 39 est à orientation variable.

Une portion 46.5 du profil des bras 46 est symétrique par rapport à un axe D qui est incliné par rapport à l'axe 4 de la turbomachine 2 et qui peut former un angle de 15 à 40° par rapport à l'axe 4.

L'homme du métier reconnaîtra que les différents modes de réalisation présentés ici peuvent être combinés et l'enseignement de l'un des modes de réalisation peut être appliqué à tous les autres modes de réalisation.

Aussi, les exemples illustrés montrent trois aubes entre deux bras adjacents. D'autres nombres d'aubes peuvent être prévus, notamment lorsque les bras sont irrégulièrement espacés angulairement. On choisira avantageusement un nombre d'aubes compris entre 3 à 10 dans chaque espace inter-bras.

Dans les exemples illustrés, les axes A et B sont représentés comme étant radiaux par commodité de représentation et de compréhension des concepts de l'invention. Néanmoins l'invention ne saurait être limitée à des axes A et B purement radiaux et en particulier une inclinaison par rapport à l'axe 4 (vu dans un plan tel que celui de la figure 2) ou un déport (axes A et/ou B ne passant pas par l'axe 4 dans la figure 3) sont également envisageables.

## Revendications

1. Module (47, 49) de compresseur (24, 26) de turbomachine (2), comprenant :
- un moyeu central (53) sensiblement axisymétrique ;
- un anneau externe (55), coaxial au moyeu central (53) ;
- une rangée annulaire de bras (46) s'étendant du moyeu central (53) à l'anneau externe (55) et définissant des espaces inter-bras (56) entre deux bras (46, 48) circonférentiellement adjacents ; et
- une rangée annulaire d'aubes statoriques (37, 39, 45) s'étendant du moyeu central (53) à l'anneau externe (55) et disposées au moins partiellement dans les espaces inter-bras (56) ;
les aubes statoriques (37, 39, 45) sont orientables autour d'un axe (A) respectif à chaque aube, le module de compresseur étant **caractérisé en ce que** chaque bras (46, 48) dispose d'une portion amont (58), fixe, et d'un volet (60) aval pivotable autour d'un axe (B) respectif à chaque volet.

2. Module (47, 49) selon la revendication 1, **caractérisé en ce que** les aubes (39) et les volets (60) disposent de bords de fuite (39.2, 46.2) respectifs, et les aubes (39) et les volets (60) sont tels qu'il existe au moins une position de pivotement des aubes (39) et/ou des volets (60) dans laquelle les bords de fuite (39.2, 46.2) respectifs partagent une position axiale commune.

3. Module (47, 49) selon l'une des revendications 1 ou 2, **caractérisé en ce que** chaque bras (46, 48) dispose d'un intrados (46.3) et d'un extrados (46.4).

4. Module (47, 49) selon l'une des revendications 1 à 3, **caractérisé en ce que** chaque bras (46, 48) a une section dont au moins une portion (46.5) est symétrique par rapport à un axe (C) parallèle à l'axe du moyeu (4) et/ou au moins une portion (46.6) est asymétrique par rapport à un axe (C) parallèle à l'axe du moyeu (4).

5. Module (47, 49) selon l'une des revendications 1 à 4, **caractérisé en ce que** chaque bras (46, 48) a une section dont une portion (46.5) est symétrique par rapport à un axe (D) non parallèle à l'axe du moyeu (4).

6. Module (47, 49) selon l'une des revendications 1 à 5, **caractérisé en ce qu'**au moins un des volets (60) a une section sensiblement identique à la section d'au moins une des aubes (39).

7. Module (47, 49) selon l'une des revendications 1 à 6, **caractérisé en ce qu'**au moins un des volets (60) a une section différente de la section d'au moins une des aubes (39), en particulier l'épaisseur de chaque volet (60) est au moins deux fois supérieure à l'épaisseur de chaque aube.

8. Module (47, 49) selon l'une des revendications 1 à 7, **caractérisé en ce que** la section des aubes (39) est identique pour toutes les aubes (37, 39, 45) de la rangée d'aubes et/ou la section des bras (46) n'est pas identique pour tous les bras (46, 48).

9. Module (47, 49) selon l'une des revendications 1 à 8, **caractérisé en ce que** deux rangées annulaires d'aubes statoriques (37, 39) axialement distantes l'une de l'autre sont agencées dans les espaces inter-bras (56).

10. Module (47, 49) selon l'une des revendications 1 à 9, **caractérisé en ce qu'**un mécanisme d'actionnement commun commande l'orientation des aubes (39) et le pivotement des volets (60).

11. Module (47, 49) selon l'une des revendications 1 à 10, **caractérisé en ce qu'**au moins deux mécanismes d'actionnement sont agencés pour orienter un premier groupe d'aubes statoriques selon une orientation et un second groupe d'aubes statoriques de la même rangée annulaire d'aubes statoriques selon une orientation différente de celle du premier groupe.

12. Module (47, 49) selon l'une des revendications 1 à 11, **caractérisé en ce qu'**entre le moyeu central (53) et l'anneau externe (55) s'étend un passage d'air de forme en col de cygne, le module étant destiné à être implanté entre deux compresseurs d'une turbomachine.

13. Module (47, 49) selon l'une des revendications 1 à 12, **caractérisé en ce que** la corde des bras est de 6 à 10 fois supérieure à la corde des aubes statoriques.

14. Module (47, 49) selon l'une des revendications 1 à 12, **caractérisé en ce que** l'épaisseur des bras est entre 2 et 5 fois supérieur à l'épaisseur des aubes statoriques.

15. Turbomachine (2) comprenant un compresseur basse-pression (24) et/ou un compresseur haute-pression (26), muni(s) d'un module (47, 49) selon l'une des revendications 1 à 14, la turbomachine comprenant une rangée d'aubes rotoriques (40, 52) directement en aval du module (47, 49).

## Patentansprüche

1. Modul (47, 49) eines Verdichters (24, 26) einer Turbomaschine (2), umfassend:
- eine im Wesentlichen achsensymmetrische Nabe (53);
- einen äußeren Ring (55), koaxial zur Nabe (53);
- eine ringförmige Reihe von Armen (46), die sich von der Nabe (53) zum äußeren Ring (55) erstrecken und Zwischenräume (56) zwischen zwei benachbarten Armen (46, 48) definieren; und
- eine ringförmige Reihe von Leitschaufeln (37, 39, 45), die sich von der Nabe (53) zum äußeren Ring (55) erstrecken und zumindest teilweise in den Zwischenräumen (56) angeordnet sind, wobei die Leitschaufeln (37, 39, 45) um eine jeweilige Achse (A) jeder Schaufel drehbar sind, wobei das Verdichtermodul **dadurch gekennzeichnet ist, dass** jeder Arm (46, 48) einen festen vorderen Abschnitt (58) und eine um eine jeweilige Achse (B) drehbare hintere Klappe (60) aufweist.

2. Modul (47, 49) nach Anspruch 1, **dadurch gekennzeichnet, dass** die Schaufeln (39) und die Klappen (60) jeweils eine Hinterkante (39.2, 46.2) aufweisen, und die Schaufeln (39) und die Klappen (60) so gestaltet sind, dass es mindestens eine Schwenkposition der Schaufeln (39) und/oder der Klappen (60) gibt, in der die jeweiligen Hinterkanten (39.2, 46.2) eine gemeinsame axiale Position teilen.

3. Modul (47, 49) nach einem der Ansprüche 1 oder 2, **dadurch gekennzeichnet, dass** jeder Arm (46, 48) eine Unterseite (46.3) und eine Oberseite (46.4) aufweist.

4. Modul (47, 49) nach einem der Ansprüche 1 bis 3, **dadurch gekennzeichnet, dass** jeder Arm (46, 48) einen Querschnitt aufweist, von dem mindestens ein Abschnitt (46.5) symmetrisch zu einer Achse (C) parallel zur Achse der Nabe (4) und/oder mindestens ein Abschnitt (46.6) asymmetrisch zu einer Achse (C) parallel zur Achse der Nabe (4) ist.

5. Modul (47, 49) nach einem der Ansprüche 1 bis 4, **dadurch gekennzeichnet, dass** jeder Arm (46, 48) einen Querschnitt aufweist, von dem ein Abschnitt (46.5) symmetrisch zu einer Achse (D) ist, die nicht parallel zur Achse der Nabe (4) verläuft.

6. Modul (47, 49) nach einem der Ansprüche 1 bis 5, **dadurch gekennzeichnet, dass** mindestens eine der Klappen (60) einen Querschnitt aufweist, der im Wesentlichen identisch mit dem Querschnitt von mindestens einer der Schaufeln (39) ist.

7. Modul (47, 49) nach einem der Ansprüche 1 bis 6, **dadurch gekennzeichnet, dass** mindestens eine der Klappen (60) einen anderen Querschnitt als mindestens eine der Schaufeln (39) aufweist, insbesondere ist die Dicke jeder Klappe (60) mindestens doppelt so groß wie die Dicke jeder Schaufel.

8. Modul (47, 49) nach einem der Ansprüche 1 bis 7, **dadurch gekennzeichnet, dass** der Querschnitt der Schaufeln (39) für alle Schaufeln (37, 39, 45) der Schaufelreihe identisch ist und/oder der Querschnitt der Arme (46) für alle Arme (46, 48) nicht identisch ist.

9. Modul (47, 49) nach einem der Ansprüche 1 bis 8, **dadurch gekennzeichnet, dass** zwei axial voneinander entfernte ringförmige Reihen von Leitschaufeln (37, 39) in den Zwischenräumen (56) angeordnet sind.

10. Modul (47, 49) nach einem der Ansprüche 1 bis 9, **dadurch gekennzeichnet, dass** ein gemeinsamer Betätigungsmechanismus die Ausrichtung der Schaufeln (39) und das Schwenken der Klappen (60) steuert.

11. Modul (47, 49) nach einem der Ansprüche 1 bis 10, **dadurch gekennzeichnet, dass** mindestens zwei Betätigungsmechanismen angeordnet sind, um eine erste Gruppe von Leitschaufeln in einer Ausrichtung und eine zweite Gruppe von Leitschaufeln derselben ringförmigen Reihe von Leitschaufeln in einer anderen Ausrichtung als die der ersten Gruppe auszurichten.

12. Modul (47, 49) nach einem der Ansprüche 1 bis 11, **dadurch gekennzeichnet, dass** sich zwischen der Nabe (53) und dem äußeren Ring (55) ein schwanenhalsförmiger Luftkanal erstreckt, wobei das Modul dazu bestimmt ist, zwischen zwei Verdichtern einer Turbomaschine eingebaut zu werden.

13. Modul (47, 49) nach einem der Ansprüche 1 bis 12, **dadurch gekennzeichnet, dass** die Sehne der Arme 6 bis 10 Mal größer ist als die Sehne der Leitschaufeln.

14. Modul (47, 49) nach einem der Ansprüche 1 bis 12, **dadurch gekennzeichnet, dass** die Dicke der Arme 2 bis 5 Mal größer ist als die Dicke der Leitschaufeln.

15. Turbomaschine (2), umfassend einen Niederdruckverdichter (24) und/oder einen Hochdruckverdichter (26), ausgestattet mit einem Modul (47, 49) nach einem der Ansprüche 1 bis 14, wobei die Turbomaschine eine Reihe von Laufschaufeln (40, 52) unmittelbar stromabwärts des Moduls (47, 49) umfasst.

## Claims

1. Compressor module (47, 49) for a turbomachine (2), comprising:
- a substantially axisymmetric central hub (53);
- an external ring (55), coaxial with the central hub (53);
- an annular row of arms (46) extending from the central hub (53) to the external ring (55) and defining inter-arm spaces (56) between two circumferentially adjacent arms (46, 48); and
- an annular row of stator blades (37, 39, 45) extending from the central hub (53) to the external ring (55) and at least partially disposed in the inter-arm spaces (56), the stator blades (37, 39, 45) being adjustable around a respective axis (A) for each blade, the compressor module being **characterized in that** each arm (46, 48) has an upstream portion (58), fixed, and a downstream flap (60) pivotable around a respective axis (B) for each flap.

2. Module (47, 49) according to claim 1, **characterized in that** the blades (39) and the flaps (60) have respective trailing edges (39.2, 46.2), and the blades (39) and the flaps (60) are such that there is at least one pivot position of the blades (39) and/or the flaps (60) in which the respective trailing edges (39.2, 46.2) share a common axial position.

3. Module (47, 49) according to one of claims 1 or 2, **characterized in that** each arm (46, 48) has an intrados (46.3) and an extrados (46.4).

4. Module (47, 49) according to one of claims 1 to 3, **characterized in that** each arm (46, 48) has a section of which at least one portion (46.5) is symmetrical with respect to an axis (C) parallel to the hub axis (4) and/or at least one portion (46.6) is asymmetrical with respect to an axis (C) parallel to the hub axis (4).

5. Module (47, 49) according to one of claims 1 to 4, **characterized in that** each arm (46, 48) has a section of which a portion (46.5) is symmetrical with respect to an axis (D) not parallel to the hub axis (4).

6. Module (47, 49) according to one of claims 1 to 5, **characterized in that** at least one of the flaps (60) has a section substantially identical to the section of at least one of the blades (39).

7. Module (47, 49) according to one of claims 1 to 6, **characterized in that** at least one of the flaps (60) has a section different from the section of at least one of the blades (39), in particular the thickness of each flap (60) is at least twice the thickness of each blade.

8. Module (47, 49) according to one of claims 1 to 7, **characterized in that** the section of the blades (39) is identical for all the blades (37, 39, 45) of the row of blades and/or the section of the arms (46) is not identical for all the arms (46, 48).

9. Module (47, 49) according to one of claims 1 to 8, **characterized in that** two axially spaced annular rows of stator blades (37, 39) are arranged in the inter-arm spaces (56).

10. Module (47, 49) according to one of claims 1 to 9, **characterized in that** a common actuation mechanism controls the orientation of the blades (39) and the pivoting of the flaps (60).

11. Module (47, 49) according to one of claims 1 to 10, **characterized in that** at least two actuation mechanisms are arranged to orient a first group of stator blades in one orientation and a second group of stator blades of the same annular row of stator blades in a different orientation from that of the first group.

12. Module (47, 49) according to one of claims 1 to 11, **characterized in that** an air passage of swan-neck shape extends between the central hub (53) and the external ring (55), the module being intended to be implanted between two compressors of a turbomachine.

13. Module (47, 49) according to one of claims 1 to 12, **characterized in that** the chord of the arms is 6 to 10 times greater than the chord of the stator blades.

14. Module (47, 49) according to one of claims 1 to 12, **characterized in that** the thickness of the arms is between 2 and 5 times greater than the thickness of the stator blades.

15. Turbomachine (2) comprising a low-pressure compressor (24) and/or a high-pressure compressor (26), provided with a module (47, 49) according to one of claims 1 to 14, the turbomachine comprising a row of rotor blades (40, 52) directly downstream of the module (47, 49).
